## Europäisches Patentamt

## European Patent Office

## Office européen des brevets

(19)

(11) Veröffentlichungsnummer: **0 073 936**
**B1**

(12) **EUROPÄISCHE PATENTSCHRIFT**

(45) Veröffentlichungstag der Patentschrift:
**31.10.84**

(51) Int. Cl.³: **F 16 K 35/00**

(21) Anmeldenummer: **82107110.7**

(22) Anmeldetag: **06.08.82**

(54) **Absperrhahn.**

(30) Priorität: **25.08.81 CH 5474/81**

(43) Veröffentlichungstag der Anmeldung:
**16.03.83 Patentblatt 83/11**

(45) Bekanntmachung des Hinweises auf die Patenterteilung:
**31.10.84 Patentblatt 84/44**

(84) Benannte Vertragsstaaten:
**AT BE DE FR GB IT LU NL SE**

(56) Entgegenhaltungen:
**DE - A - 1 775 988**
**DE - B - 1 650 488**
**FR - A - 1 338 859**
**GB - A - 387 600**
**GB - A - 637 658**
**US - A - 1 499 663**

(73) Patentinhaber: **Taco Armaturen AG,**
**Buckhauserstrasse 40, CH-8048 Zürich (CH)**

(72) Erfinder: **Markwat, Willem Jan, Tödiweg 3,**
**CH-8802 Kilchberg (CH)**

(74) Vertreter: **Blum, Rudolf Emil Ernst et al, c/o E. Blum &**
**Co Patentanwälte Vorderberg 11, CH-8044 Zürich (CH)**

## Beschreibung

Die Erfindung betrifft einen Absperrhahn, dessen im Gehäuse drehbar gelagertes Hahnküken über einen Handhebel in zwei Endstellungen, nämlich in einer offen-Stellung und einer zu-Stellung des Hahnes drehbar ist, wobei zur Begrenzung dieser Endstellungen miteinander zur Anlage kommende Anschläge vorhanden sind, die zum Teil mit dem Gehäuse und zum Teil mit dem Hahnküken drehfest in Verbindung stehen, und mit einer Verriegelungseinrichtung zwischen dem Gehäuse und dem Handhebel, um sowohl die offen-Stellung als auch die zu-Stellung des Handhebels bezüglich des Gehäuses zu verriegeln, wobei die Verriegelungseinrichtung einen um die Drehachse des Hahnkükens drehbaren und axial verschiebbaren Sperriegel aufweist.

Ein solcher Absperrhahn ist durch die DE-B2-1 650 488 bekannt. Bei diesem erfolgt die Verriegelung durch die Kraft einer Feder, die den Sperriegel zur Anlage an zumindest einen gehäusefesten Anschlag bringt. Die Entriegelung erfolgt gegen die Kraft der Feder. Das bedeutet, daß sich der Absperrhahn im Ruhezustand immer in der verriegelten Lage befindet. Das gleiche gilt auch für die bekannten Absperrhähne nach der US-A-1 499 663, GB-A-387 600, DE-A-1 775 988 und GB-A-637 658. Bei den vorerwähnten Hähnen nach der US-A-1 499 663 und GB-A-387 600 kann nur die geschlossene Stellung des Hahnes verriegelt werden. Es besteht also keine Verriegelung, die verhindert, daß ein geöffneter Hahn nicht ohne weiteres geschlossen werden kann. Weiterhin kann bei allen genannten Absperrhahnen die Verriegelung durch eine bestimmte Manipulation von Hand von jedermann aufgehoben werden, so daß also keine Verriegelung gegen unbefugtes Umschalten des Absperrhahnes vorliegt.

Es wird die Schaffung eines Absperrhahnes eingangs genannter Art bezweckt, bei dem also sowohl die offen-Stellung als auch die zu-Stellung des Handhebels verriegelbar ist, wobei der Absperrhahn im Ruhezustand, wenn er also nicht betätigt wird, nicht verriegelt ist, also ohne Aufhebung einer zwangsläufig vorhandenen Verriegelung beliebig umgeschaltet werden kann. Will man das verhindern, dann muß man bewußt die Verriegelung vornehmen, da also die Verriegelungseinrichtung im Ruhezustand nicht in Betrieb ist. Weiterhin soll die Verriegelung sowie die Entriegelung nur mit Handbetätigungen und mechanischen Organen, also ohne Zusatzenergien elektrischer, hydraulischer oder pneumatischer Art erfolgen.

Der erfindungsgemäße Absperrhahn ist dadurch gekennzeichnet, daß der Sperriegel auf der Drehachse des Hahnkükens frei drehbar ist, daß der Sperriegel einen Büchsenteil umfaßt, daß der Sperriegel einen an sich bekannten segmentförmigen Riegelteil umfaßt, der den Büchsenteil axial und radial überragt und an die Mantelfläche des Büchsenteils anschließt, das der Sperriegel mit seinem segmentförmigen Riegelteil in den quer zur Drehachse des Hahnkükens liegenden Zwischenraum zwischen einen gehäusefesten und zumindest einem hahnkükenfesten Anschlag durch axiale Verschiebung in seine Riegelstellung einsetzbar ist und diesen Zwischenraum ausfüllt, und daß der Sperriegel gegen die Kraft einer Feder in seine Riegelstellung verschiebbar und durch die Kraft der Feder in einer Stellung aus dem Eingriffsbereich der Anschläge gehalten ist.

Es ist zwar schon durch die FR-A-1 338 859 ein Absperrhahn bekannt, bei dem sowohl die offen-Stellung als auch die zu-Stellung des Handhebels nur gewünschtenfalls verriegelbar ist. Die Verriegelung erfolgt hierbei ebenfalls nur mit Handbetätigungen und einfachen mechanischen Organen, also ohne Zusatzenergien. Der Sperriegel ist als Schwenkarm ausgebildet, so daß mit der Entfernung der Schwenkachse durch Unbefugte die Verriegelung aufgehoben werden könnte. Mit der Ausbildung des erfindungsgemäßen Absperrhahns nach dem Anspruch 2 kann der Büchsenteil der Verriegelungseinrichtung so über sonst von außen zugängliche Teile des Hahnes gestülpt werden, daß von einem Unbefugten die Verriegelung nicht ohne Zerstörung aufgehoben werden kann.

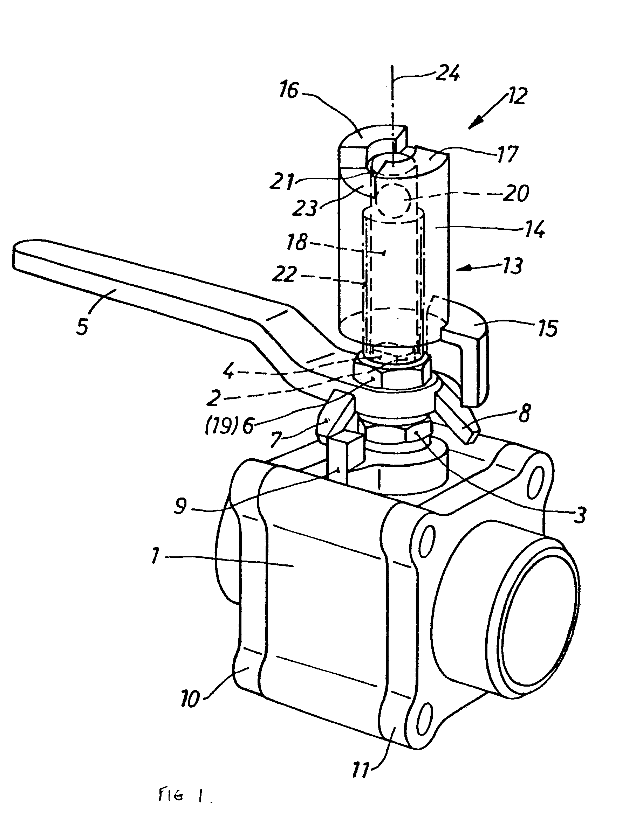

In der Zeichnung ist ein Ausführungsbeispiel des erfindungsgemäßen Absperrhahns in schaubildlicher Darstellung gezeigt.

Im folgenden wird zuerst der bekannte Aufbau des Absperrhahns erläutert. Der Absperrhahn hat ein Gehäuse 1, in dem sich ein drehbar gelagertes, nicht sichtbares Hahnküken befindet. In dieses Hahnküken greift ein Drehbolzen 2 formschlüssig ein, um es in zwei Endstellungen, nämlich in eine offen-Stellung und eine zu-Stellung zu drehen. Zwischen dem Gehäuse 1 und dem Drehbolzen 2 befinden sich nicht sichtbare Dichtungsringe, um jegliche Leckage aus dem Gehäuse zu vermeiden. Dieser Drehbolzen 2 wird mittels einer Stoppmutter 3 im Gehäuse 1 ohne axiales Spiel drehbar gehalten. Zum Drehen des Drehbolzens 2 ist dieser mit zwei parallel zueinander liegenden Abflachungen 4 versehen, auf denen ein Handhebel 5 formschlüssig sitzt. Dieser Handhebel 5 wird durch eine Mutter 6 am Drehbolzen 2 befestigt. Der Handhebel 5 ist mit zwei im Winkel von 90° zueinander versetzt liegenden Anschlägen 7, 8 versehen. Da der Handhebel 5 drehfest mit dem Drehbolzen 2 und dieser wiederum drehfest mit dem nicht gezeigten Hahnküken verbunden ist, kann man sagen, daß die beiden Anschläge 7, 8 mit dem Hahnküken drehfest in Verbindung stehen. Das Gehäuse 1 ist mit einem Anschlag 9 versehen. Das Gehäuse 1 weist noch zwei Deckel 10, 11 auf, an die nicht dargestellte Leitungsabschnitte für die zu fördernden Flüssigkeiten oder Gase angeschlossen werden. Dieser vorerwähnte Aufbau des Absperrhahns ist bekannt.

Der erfindungsgemäße Absperrhahn weist nunmehr eine oben auf dem Absperrhahn sitzende Verriegelungseinrichtung 12 auf. Diese hat einen Sperriegel 13, der einen Büchsenteil 14 und einen segmentförmigen Riegelteil 15 umfaßt. Der Büchsenteil 14 ist einstückig mit dem Riegelteil 15. Der Riegelteil 15 überragt den zylindrischen Büchsenteil 14 axial und radial und schließt sich an die Mantelfläche des Büchsenteils 14 an. Der Riegelteil 15 erstreckt sich über einen Umfangswinkel von etwa 90°. Die vom Gehäuse 1 abgewandt liegende Stirnseite des Büchsenteils 14 ist mit zwei axial vorstehenden, einander diametral gegenüberliegenden Segmenten 16, 17 versehen. Der Büchsenteil 14 hat eine nicht dargestellte Durchgangsbohrung mit mehreren, ebenfalls nicht dargestellten Absätzen.

Die Verriegelungseinrichtung 12 umfaßt weiterhin einen Lagerzapfen 18 mit daran vorhandener Mutter 19. Diese Mutter 19 ist mit der Lage der in der Zeichnung dargestellten Mutter 6 identisch, d. h. die beim bekannten Absperrhahn vorhandene Mutter 6 wird nunmehr beim erfindungsgemäßen Absperrhahn durch die Mutter 19 ersetzt, an der sich der Lagerzapfen 18 befindet. Der Lagerzapfen 18 hat im Bereich seines freien Endes eine Durchgangsbohrung 20, und beim freien Ende des Lagerzapfens 18 befindet sich eine Ringnut für einen Sicherungsring 21, der an einem nicht gezeigten Absatz der Bohrung des Büchsenteils 14 anliegt, so daß der Sperriegel 13 im montierten Zustand nicht axial nach oben vom Lagerzapfen 18 entfernt werden kann.

Innerhalb des Büchsenteils 14 liegt eine Schraubendruckfeder 22, die einerends auf der Mutter 19 und andererends über einen nicht dargestellten Absatz am Büchsenteil 14 abgestützt ist. Diese Schraubendruckfeder 22 liegt also konzentrisch im Raum zwischen der Bohrung des Büchsenteils 14 und dem Lagerzapfen 18. Durch die Kraft der Feder 22 wird der Sperriegel 13 in der dargestellten Lage gehalten, wobei der segmentförmige Riegelteil 15 des Sperriegels 13 außerhalb des Eingriffsbereichs der Anschläge 7, 8 gehalten wird, so daß also der Handhebel 5 von seiner dargestellten Stellung aus um 90° geschwenkt werden kann, bis die Anschläge 8, 9 aneinander anliegen. Der dargestellte Absperrhahn befindet sich in seiner offen-Stellung. Der Sperriegel 13 ist in der dargestellten Stellung auf dem Lagerzapfen 18 frei drehbar.

Soll die gezeigte offen-Stellung des Absperrhahns verriegelt werden, muß der Sperriegel 13 gegen die Kraft der Feder 22 axial verschoben werden, so daß der segmentförmige Riegelteil 15 in den Zwischenraum zwischen dem gehäusefesten Anschlag 9 und dem beim Handgriff 5 vorhandenen Anschlag 8 (hahnkükenfester Anschlag) eingesetzt wird. Der gezeigte Sperriegel 13 wird also von Hand etwas im Uhrzeigersinn gedreht, bis der Riegelteil 15 in diesen Zwischenraum eingesetzt werden kann, wobei er diesen Zwischenraum ausfüllt. Der Handhebel 5 kann jetzt nicht mehr in die zu-Stellung des Hahns gedreht werden, da der Handhebel 5 über seinen Anschlag 8 und den Riegelteil 15 am Anschlag 9 des Gehäuses 1 abgestützt ist. Die gegen die Kraft der Feder 22 axial nach unten geschobene Stellung des Sperriegels 13 muß jetzt natürlich noch verriegelt werden. Befindet sich der Riegelteil 15 im Zwischenraum zwischen den Anschlägen 8, 9, liegt die Durchgangsbohrung 20 oberhalb der Stirnfläche 23 des Büchsenteils 14 und liegt ausgerichtet im Zwischenraum zwischen den Segmenten 16, 17, und ist somit frei zugänglich zum Einsetzen eines nicht dargestellten, erwähnten Schlosses. Die Segmente 16, 17 sind vorhanden, um Sperrklauen zu bilden, damit das erwähnte Schloß nicht zusammen mit dem Lagerzapfen 18 gegenüber dem Sperriegel 13 um die Drehachse 24 gedreht werden kann. Die Drehachse 24 stellt eine Drehachse für das erwähnte Hahnküken, den Drehbolzen 2, die Muttern 3 und 19 sowie für den Lagerzapfen 18 und den Sperriegel 13 dar.

Soll der Absperrhahn in seiner zu-Stellung verriegelt werden, so liegt der Anschlag 8 am Anschlag 9 an, und der segmentförmige Riegelteil 15 wird dann in den Zwischenraum zwischen dem Anschlag 7 und dem Anschlag 9 axial eingesetzt.

Ist der Sperriegel 13 in seine Riegelstellung axial verschoben worden, so liegt die untere Stirnfläche des Büchsenteils 14 auf dem Handhebel 5 auf, das bedeutet, daß die Mutter 19 innerhalb des Büchsenteils 14 liegt und somit von außen nicht zugänglich ist. Zur jeweiligen Verriegelung des Handhebels in der offen-Stellung oder in der zu-Stellung wird also zusätzlich noch erreicht, daß auch die Befestigung des Handhebels am Drehbolzen 2 verriegelt ist, so daß kein Unbefugter den Handhebel 5 demontieren kann und auch nicht den Drehbolzen 2 mit irgend einem Werkzeug drehen kann. Die an sich zugängliche Stoppmutter 3 kann aber auch nicht aus dem Gehäuse 1 geschraubt werden, da sie nach oben am festgelegten Handgriff 5 anliegt. Durch die Verriegelungseinrichtung wird somit ein unbefugtes Öffnen oder Schließen des Absperrhahns verhindert, und weiterhin wird verhindert, daß die eingestellte Lagerung des Drehbolzens 2 verändert werden kann, so daß also auch eine zur Leckage führende Manipulation unterbunden wird.

Beim erfindungsgemäßen Absperrhahn ist also die bei bekannten Absperrhahnen vorhandene Mutter 6 nicht vorhanden. Wird ein bekannter Absperrhahn, der die Mutter 6 aufweist, nachträglich umgerüstet, so wird die bekannte Mutter 6 entfernt und durch die Mutter 19 mit daran vorhandenem Lagerzapfen 18 ersetzt. Neben dem erfindungsgemäßen Absperrhahn kann also auch lediglich die aus den Bauteilen 12—23 bestehende Verriegelungseinrichtung als Bausatz auf den Markt gebracht werden. Diese als Bausatz vorliegende Verriegelungseinrichtung hat dann also den Lagerzapfen 18 mit Mutter 19, den auf dem Lagerzapfen 18 frei drehbaren und axial verschiebbaren Sperriegel 13, die dazwi-

schenliegende Schraubendruckfeder 22 und den am freien Lagerzapfenende vorhandenen Sicherungsring 21, wobei diese Bauteile so zusammengebaut sind, daß einerseits die Schraubendruckfeder 22 den Sperriegel 13 in Anlage mit dem Sicherungsring 21 hält und daß andererseits der Sperriegel 13 gegen die Kraft der Feder 22 so axial auf dem Lagerzapfen 18 verschiebbar ist, daß die Mutter 19 im Innern des Sperriegels 13 zu liegen kommt.

Es ist bisher die Verstellung des Handhebels 5 um 90° zwischen zwei Endstellungen, nämlich der offen-Stellung und der zu-Stellung erläutert worden. Es wäre auch ein anderer Absperrhahn denkbar, bei dem ein anderes Hahnküken und/ oder anderes Gehäuse verwendet wird, so daß es sinnvoll ist eine Zwischenstellung des Handhebels 5 zu verriegeln. Auch dies kann mit der erläuterten Verriegelungseinrichtung bewirkt werden, wobei lediglich ein anderer Sperriegel 13 verwendet wird, bei dem der Verriegelungsteil 15 etwas anders geformt ist. Will man z. B. den Handhebel 5 von der gezeigten Lage aus nur um 45° verdrehen und diese Stellung dann verriegeln, so wird der segmentförmige Riegelteil 15 an seiner unteren Stirnfläche mit einer Ausnehmung versehen, so daß der Riegelteil 15 über den gehäusefesten Anschlag 9 gestülpt werden kann. Weiterhin muß der Riegelteil über einen größeren Umfangswinkel reichen, so daß er in seiner Riegelstellung den Zwischenraum zwischen den beiden Anschlägen 7 und 8 ausfüllt, wobei er über den Anschlag 9 gestülpt worden ist.

**Patentansprüche**

1. Absperrhahn, dessen im Gehäuse (1) drehbar gelagertes Hahnküken über einen Handhebel (5) in zwei Endstellungen, nämlich in eine offen-Stellung und eine zu-Stellung des Hahnes drehbar ist, wobei zur Begrenzung dieser Endstellung miteinander zur Anlage kommende Anschläge (7, 8, 9) vorhanden sind, die zum Teil (9) mit dem Gehäuse (1) und zum Teil (7, 8) mit dem Hahnküken drehfest in Verbindung stehen, und mit einer Verriegelungseinrichtung (12—13) zwischen dem Gehäuse (1) und dem Handhebel (5), um sowohl die offen-Stellung als auch die zu-Stellung des Handhebels (5) bezüglich des Gehäuses (1) zu verriegeln, wobei die Verriegelungseinrichtung (12—23) einen um die Drehachse (24) des Hahnkükens drehbaren und axial verschiebbaren Sperriegel (13) aufweist, dadurch gekennzeichnet, daß der Sperriegel (13) auf der Drehachse (24) des Hahnkükens frei drehbar ist, daß der Sperriegel (13) einen Büchsenteil (14) umfaßt, daß der Sperriegel (13) einen an sich bekannten segmentförmigen Riegelteil (15) umfaßt, der den Büchsenteil (14) axial und radial überragt und an die Mantelfläche des Büchsenteils (14) anschließt, daß der Sperriegel (13) mit seinem segmentförmigen Riegelteil (15) in den quer zur Drehachse (24) des Hahnkükens liegenden Zwischenraum zwischen einem gehäusefesten und zumindest einem hahnkükenfesten Anschlag (9 bzw. 7 oder 8) durch axiale Verschiebung in seine Riegelstellung einsetzbar ist und diesen Zwischenraum ausfüllt, und daß der Sperriegel (13) gegen die Kraft einer Feder (22) in seine Riegelstellung verschiebbar und durch die Kraft der Feder (22) in einer Stellung aus dem Eingriffsbereich der Anschläge (7, 8, 9) gehalten ist.

2. Absperrhahn nach Anspruch 1, dadurch gekennzeichnet, daß die Verriegelungseinrichtung (12—23) einen Lagerzapfen (18) mit daran befestigter Mutter (19) aufweist, wobei auf dem Lagerzapfen (18) der Sperriegel (13) frei drehbar gelagert und axial verschiebbar ist, daß die Mutter (19) des Lagerzapfens (18) auf einem das Hahnküken tragenden Drehbolzen (2) aufgeschraubt ist, und daß der Büchsenteil (14) des Sperriegels (13) in seiner Riegelstellung über die Mutter (19) gestülpt ist.

3. Absperrhahn nach Anspruch 2, dadurch gekennzeichnet, daß der Lagerzapfen (18) in an sich bekannter Weise mit einer Durchgangsbohrung (20) versehen ist, die in der Riegelstellung des Sperriegels (13) frei zugänglich ist.

4. Absperrhahn nach Anspruch 3, dadurch gekennzeichnet, daß die vom Gehäuse (1) abgewandt liegende Stirnseite (23) des Büchsenteils (14) mit zwei axial vorstehenden, einander diametral gegenüberliegenden Segmenten (16, 17) zum Bilden von Sperrklauen versehen ist, und daß in der Riegelstellung des Sperriegels (13) die Durchgangsbohrung (20) im Sperrklauenzwischenraum ausgerichtet liegt.

5. Verriegelungseinrichtung zur Verwendung bei einem Absperrhahn nach Anspruch 1, dadurch gekennzeichnet, daß sie einen Lagerzapfen (18) mit daran befestigter Mutter (19), einen auf dem Lagerzapfen (18) frei drehbaren und axial verschiebbaren Sperriegel (13), eine dazwischenliegende Schraubendruckfeder (22) und einen am freien Lagerzapfenende vorhandenen Sicherungsring (21) umfaßt, das Ganze zusammengebaut derart, daß einerseits die Schraubendruckfeder (22) den Sperriegel (13) in Anlage mit dem Sicherungsring (21) hält, und daß andererseits der Sperriegel (13) gegen die Kraft der Feder (22) so axial auf dem Lagerzapfen (18) verschiebbar ist, daß die Mutter (19) im Innern des Sperriegels (13) zu liegen kommt.

6. Verriegelungseinrichtung nach Anspruch 5, dadurch gekennzeichnet, daß sie als Bausatz (12—23) für ein nachträgliches Umrüsten eines vorhandenen Absperrhahns zum Absperrhahn nach Anspruch 1 vorliegt.

**Claims**

1. Stop valve having a casing (1) and a stopcock rotatably supported therein and retatable by means of a hand lever (5) into two end positions, namely a stopcock open position and a stopckock closed position, having abutment stops (7, 8, 9) which are engageable into each other to define said end positions, which abutment stops are rigidly mounted for rotation partly (9) to the casing (1) and partly (7, 8) to the stopcock, and having a locking mechanism (12—13) between the casing (1) and the hand lever (5) operative to lock the open position as well as the chlosed position of the hand lever (5) relative to the casing (1), which locking mechanism is provided with a locking bolt (13) which is rotatable around the axis (24) of rotation of the stopcock and is axially displaceable, characterized in that the locking bolt (13) is freely rotatable on the axis (24) of rotation of the stopcock, that the locking bolt (13) comprises a bush part (14), that the locking bolt (13) comprises a generally known segment-shaped locking part (15) extending axially and radially beyond the bush part (14) and extending adjacent to the generated surface of the bush part (14), that the locking bolt (13) including its segment-shaped locking part (15) is insertable into the interstice extending laterally to the axis (24) of rotation of the stopcock between an abutment stop rigid with the casing and at least an abutment stop rigid with the stopcock (9; 7 or 8) by means of an axial displacement into its locking position and filling out said interstice, and that the locking bolt (13) is displaceable into its locking position against the force of a spring (22) and is held by the force of the spring (22) in a position remoté from the zone of contact of the abutment stops (7, 8, 9).

2. Stop valve according to claim 1, characterized in that the locking mechanism (12—23) is provided with a journal pin (18) and a nut (19) mounted thereto, and that the locking bolt (13) is free rotatably supported by the journal pin (18) and axially displaceable, that the nut (19) of the journal pin (18) is threaded onto a fulcrum pin (2) supporting the valve cock, and that the bush part (14) of the locking bolt (13) in its locking position is slipped over the nut (19).

3. Stop valve according to claim 2, characterized in that the journal pin (18) is provided in a as such known way with a through bore (20) which is freely accessible in the locking position of the locking bolt.

4. Stop valve according to claim 3, characterized in that the face surface (23) of the bush part (14) located oppositely relative to the casing (1) is provided with two segments (16, 17) projecting in axial direction and located diametrically opposite to each other, which two segments form blocking dogs, and in that the through bore (20) is aligned in the blocking dog interstice when the locking bolt (13) is in its locking position.

5. Locking device for application at a stop valve according to claim 1, characterized in that it encompasses a journal pin (18) including a nut (19) mounted thereto, a locking bolt (13) freely rotatable on the journal pin (18) and axially displaceable, a helical compression spring (22) located therebetween and a safety ring (21) located at the free end of the journal pin (18), the entirety assembled such, that on the one hand the helical compression spring (22) holds the locking bolt (13) in a position engaging the safety ring (21), and that on the other hand the locking bolt (13) is displaceable against the force of the spring (22) axially such on the journal pin (18), that the nut (19) comes to lie within the locking bolt (13).

6. Locking device according to claim 5, characterized in that it is provided as kit (12—23) for a later modification of a prevailing stopcock of a stop valve according to claim 1.

**Revendications**

1. Robinet d'arrêt dont le boisseau, monté à rotation dans le corps (1), peut être amené par rotation, par l'intermédiaire d'un levier à main (5), dans deux positions extrêmes, à savoir une position d'ouverture et une position de fermeture du robinet, où, pour limiter ces positions extrêmes, il y a des butées (7, 8, 9) venant s'appliquer l'une contre l'autre, qui sont en liaison solidaire en rotation, pour partie (9) avec le corps (1), et pour partie (7, 8) avec le boisseau du robinet, et avec un dispositif de verrouillage (12, 13) entre le corps (1) et le levier à main (5) pour verrouiller par rapport au corps (1) aussi bien la position d'ouverture que la position de fermeture du levier à main (5), le dispositif de verrouillage (12, 23) comportant un verrou de blocage (13) capable de tourner autour de l'axe de rotation (24) du boisseau du robinet et dàplaçable axialement, caractérisé en ce que le verrou de blocage (13) peut tourner librement sur l'axe de rotation (24) du boisseau du robinet, en ce que le verrou de blocage (13) comprend une partie (14) en forme de douille, en ce que le verrou de blocage (13) comprend une pièce de verrou (15) en forme de segment connue en soi, qui surplombe axialement et radialement la partie en forme de douille (14) et se raccorde à la surface latérale de la partie en forme de douille (14), en ce que le verrou de blocage (13) peut être engagé, par déplacement axial dans sa position de verrouillage, avec sa pièce de verrou (15) en forme de segment, dans l'espace intermédiaire se trouvant transversalement à l'axe de rotation (24) du boisseau du robinet, entre une butée solidaire du corps et au moins une butée solidaire du boisseau du robinet (9, respectivement 7 ou 8), et remplit cet espace intermédiaire, et en ce que le verrou de blocage (13) est déplaçable dans sa position de verrouillage, à l'encontre de la force d'un ressort (22) et est maintenu par la force du ressort (22) dans une position dégagée de la région de coopération des butées (7, 8, 9).

2. Robinet d'arrêt suivant la revendication 1, caractérisé en ce que le dispositif de verrouillage (12, 23) comporte un tourillon de montage (18) avec un écrou (19) qui y est fixé, le verrou de blocage (13) étant monté sur le tourillon de montage (18) de manière à pouvoir tourner librement et à se déplacer axialement, en ce que l'écrou (19) du tourillon de montage (18) est vissé sur une broche-pivot (2) portant le biosseau du robinet, et en ce que la partie en forme de douille (14) du verrou de blocage (13) est enfilée, dans sa position de verrouillage, sur l'écrou (19).

3. Robinet d'arrêt suivant la revendication 2, caractérisé en ce que le tourillon de montage (18) est pourvu, de façon connue en soi, d'une forure (20) passant de part en part, qui est librement accessible dans la position de verrouillage du verrou de blocage (13).

4. Robinet d'arrêt suivant la revendication 3, caractérisé en ce que la face frontale (23), se trouvant à distance du corps (1), de la pièce en forme de douille (14), est pourvue de deux segments (16, 17) diamétralement opposés, s'avançant axialement, pour former des griffes d'arrêt et en ce qu'en position de verrouillage du verrou de blocage (13), la forure (20) passant de part en part est dirigée dans l'espace intermédiaire entre les griffes d'arrêt.

5. Dispositif de verrouillage pour être employé dans un robinet d'arrêt suivant la revendication 1, caractérisé en ce qu'il comprend un tourillon de montage (18) avec un écrou (19) qui y est fixé, un verrou de blocage (13) pouvant tourner librement et se déplacer axialement sur le tourillon de montage (18), un ressort hélicoïdal de compression intermédiaire (22) et une bague de sûreté (21) se trouvant à l'extrémité libre du tourillon de montage, le tout étant monté ensemble de telle sorte que, d'une part, le ressort hélicoïdal de compression (22) maintient le verrou de blocage (13) applique contre la bague de sûreté (21) et en ce que, d'autre part, le verrou de blocage (13) est déplaçable axialement à l'encontre de la force du ressort (22), sur le tourillon de montage (18), de telle sorte que l'écrou (19) vienne se trouver à l'intérieur du verrou de blocage (13).

6. Dispositif de verrouillage suivant la revendication 5, caractérisé en ce qu'il se présente comme un ensemble constructif (12, 23) pour l'équipement ultérieur d'un robinet d'arrêt existant, pour en faire un robinet d'arrêt suivant la revendication 1.

FIG 1.